# EUROPÄISCHE PATENTSCHRIFT

(11) **EP 1 306 651 B1**
(45) Veröffentlichungstag und Bekanntmachung des Hinweises auf die Patenterteilung: **21.09.2005**
(21) Anmeldenummer: 02013877.2
(22) Anmeldetag: 01.07.2002
(51) Int. Cl.: G01D 5/48, G01D 11/24, G01D 11/30

(54) **Wegaufnehmervorrichtung und Verfahren zur Herstellung**
Displacement sensor and method of fabrication
Capteur de déplacement et méthode de fabrication

(30) Priorität: 23.10.2001 DE 10153489
(43) Veröffentlichungstag der Anmeldung: 02.05.2003
(73) Patentinhaber: BALLUFF GmbH, 73765 Neuhausen (DE)
(72) Erfinder: Kurz, Martin, 73061 Ebersbach/Fils (DE); Eckel, Gerd, 73240 Wendlingen (DE); Holder, Roland, 73265 Dettingen/Teck (DE); Eberle, Hansjürgen, 72654 Neckartenzlingen (DE); Springer, Roland, 73765 Neuhausen (DE); Hoffmann, Michael, 73765 Neuhausen (DE); Roth, Walter, 72649 Wolfschlugen (DE)
(74) Vertreter: Hoeger, Stellrecht & Partner Patentanwälte

(56) Entgegenhaltungen:
- EP-A- 0 987 521
- DE-A- 3 115 587
- DE-A- 19 504 608
- FR-A- 2 749 384
- US-A- 5 736 855

## Beschreibung

Die Erfindung betrifft eine Wegaufnehmervorrichtung zur Erfassung des Weges eines Positionsgebers, umfassend ein sich in einer Längsrichtung erstreckendes Gehäuse, einen in dem Gehäuse angeordneten, sich parallel zu der Längsrichtung erstreckenden Meßfühler, an welchen der Positionsgeber berührungslos koppelt, und ein an dem Gehäuse angeordnetes elektrisches Anschlußelement.

Derartige Wegaufnehmervorrichtungen sind beispielsweise aus der US 5 736 855, der DE 43 06 951 A1, der US 5 903 426 oder der US 5 923 164 bekannt.

Mittels ihrer läßt sich der Weg eines beweglichen Maschinenelements erfassen, an welches der Positionsgeber gekoppelt ist. Insbesondere werden dabei transsonare Wegaufnehmervorrichtungen eingesetzt, bei denen der Positionsgeber ein Permanentmagnet oder Elektromagnet ist und der Weg über die Laufzeit von propagierenden mechanischen Wellen auf einem von dem Meßfühler umfaßten Wellenielter ermittelt wird.

Derartige Wegaufnehmervorrichtungen weisen eine Vielzahl von Anwendungen auf.

Aus der EP 0 987 521 A1 ist ein Sensor bekannt, welcher ein Detektorelement aufweist, einen Schaltungsträger aufweist und einen Anschluß, welcher elektrisch mit dem Schaltungsträger verbunden ist.

Aus der DE 195 04 608 A1 ist ein Positionssensor bekannt, welcher eine auf einem Träger angeordnete elektrische Schaltung umfaßt, welche mit einem elektrischen Anschlußelement und mit einem Sensorelement verbunden ist. Es ist ein Gehäuse mit einem Innenraum zur Aufnahme des Trägers mit der elektrischen Schaltung vorgesehen, welches eine Öffnung für das Anschlußelement und eine Öffnung für das Sensorelement aufweist.

Aus der FR 2 749 384 A1 ist ein magnetischer Näherungssensor bekannt.

Aus der DE 31 15 587 A1 ist eine Vorrichtung zur Aufnahme eines magnetisch betätigbaren Zungenkontakts bekannt.

Aus dem Prospekt "Wegaufnehmer, Drehgeber" von Gefran spa, 74, 25050 Provaglio, D'Iseo (BS) Italien, Code 80411-01/00 sind potentiometrische Wegaufnehmer und Drehgeber bekannt.

Davon ausgehend liegt der Erfindung die Aufgabe zugrunde, eine Wegaufnehmervorrichtung zu schaffen, welche auf einfache und kostengünstige Weise herstellbar ist.

Diese Aufgabe wird bei der eingangs genannten Wegaufnehmervorrichtung erfindungsgemäß dadurch gelöst, daß ein Deckel zum Verschluß des Gehäuses an einem Ende und das Anschlußelement als Einheit miteinander verbunden sind und daß diese Deckel-Anschlußelement-Einheit über den Deckel an dem Gehäuse fixiert ist, daß der Deckel einen Eintauchbereich aufweist, mittels welchem er in einen Innenraum des Gehäuses eintaucht, daß die Deckel-Anschlußelement-Einheit mittels des Eintauchbereiches schraubenlos an dem Gehäuse fixiert ist und daß zwischen dem Eintauchbereich und einer Gehäuseinnenwand eine oder mehrere Dichtungen angeordnet sind.

Dadurch, daß Deckel und Anschlußelement miteinander verbunden sind, d. h. daß das Anschlußelement in den Deckel integriert ist, läßt sich zum einen die Anzahl der Bauteile der Wegaufnehmervorrichtung verringern und zum anderen ist die Herstellung erleichtert, da bei dem Zusammenbau aus den Bauteilen das Anschlußelement und der Deckel bereits eine Einheit darstellen. Weiterhin läßt sich das Anschlußelement über den Deckel auf einfache Weise an dem Gehäuse fixieren.

Ganz besonders vorteilhaft ist es, wenn der Deckel einen Eintauchbereich aufweist, mittels welchem er in einen Innenraum des Gehäuses eintaucht. Über diesen Eintauchbereich läßt sich dann der Deckel und damit die Deckel-Anschlußelement-Einheit und damit wiederum auch der Meßfühler an dem Gehäuse fixieren. Die Fixierung läßt sich dadurch auf einfache und kostengünstige Weise herstellen und insbesondere schraubenlos möglich. Günstigerweise ist also die Deckel-Anschlußelement-Einheit mittels des Eintauchbereiches schraubenlos an dem Gehäuse fixiert.

Weiterhin ist es vorgesehen, daß zwischen dem Eintauchbereich und einer Gehäuseinnenwand eine oder mehrere Dichtungen angeordnet sind, welche insbesondere in der Form eines O-Rings ausgebildet sind. Dazu sind insbesondere in dem Eintauchbereich eine oder mehrere Nuten zur Aufnahme solcher O-Ringe gebildet. Dadurch, daß dann in den Deckel der Deckel-Anschlußelement-Einheit Dichtungen integriert sind, läßt sich mit geringem Aufwand eine hohe Schutzart wie IP 67 erreichen; O-Ringe sind dabei im Gegensatz zu Flachdichtungen (die erforderlich wären, wenn der Deckel an einer Stirnseite des Gehäuses abgedichtet werden würde) als Standardteil erhältlich und damit erheblich kostengünstiger als Flachdichtungen.

Insbesondere ist es dabei vorgesehen, daß die Deckel-Anschlußelement-Einheit in das Gehäuse geschoben an diesem fixiert ist. Dadurch läßt sich eine schraubenlose Fixierung des Deckels und damit auch des Anschlußelements an dem Gehäuse erreichen, so daß der Zusammenbau der erfindungsgemäßen Wegaufnehmervorrichtung auf einfache und schnelle Weise erfolgen kann und zudem auch Bauteile (Schrauben) eingespart sind. Die Verbindung läßt sich einfach herstellen, wenn ein entsprechender Innenbereich des Gehäuses im wesentlichen rotationssymmetrisch ausgestaltet ist, unabhängig davon, ob der Außenbereich des Gehäuses rotationssymmetrisch ist oder nicht. Bei entsprechender angepaßter rotationssymmetrischer Ausgestaltung des Deckels mindestens bezüglich seines Eintauchbereichs ins Gehäuse läßt sich dadurch die Verbindung auf einfache Weise und insbesondere schraubenfrei mit hoher Dichtigkeit herstellen.

Ganz besonders vorteilhaft ist es, wenn der Meßfühler durch die Deckel-Anschlußelement-Einheit in dem Gehäuse gehalten ist. Vor dem Einsetzen dieser Deckel-Anschlußelement-Einheit läßt sich dann der Meßfühler an dieser Einheit fixieren. Dadurch ist wiederum eine Deckel-Anschlußelement-Meßfühler-Einheit gebildet, die sich vor dem Einsetzen in das Gehäuse austesten läßt, insbesondere bezüglich ihrer Sensoreigenschaften. Diese Deckel-Anschlußelement-Meßfühler-Einheit läßt sich als Ganzes handhaben; sie läßt sich damit auch als Ganzes in das Gehäuse einsetzen. Bei einer derart hergestellten Einheit läßt sich damit der Zusammenbau der Wegaufnehmervorrichtung auf einfache Weise erreichen, nämlich indem die Deckel-Anschlußelement-Meßfühler-Einheit in dieses eingeschoben wird. Gegebenenfalls muß das Gehäuse dann nur noch an dem anderen Ende mit einem Deckel verschlossen werden und die erfindungsgemäße Wegaufnehmervorrichtung ist hergestellt.

Weiterhin ist es günstig, wenn eine interne Schaltungsanordnung der Wegaufnehmervorrichtung an der Deckel-Anschlußelement-Einheit angeordnet ist, so daß auch dadurch der Zusammenbau der Wegaufnehmervorrichtung stark vereinfacht ist und im übrigen auch diese Einheit mit dem Meßfühler als Ganzes insbesondere elektrisch austestbar ist.

Bei einer Variante einer Ausführungsform ist es vorgesehen, daß die Deckel-Anschlußelement-Einheit ein sich in der Längsrichtung erstreckendes Halteelement aufweist, mittels welchem die Deckel-Anschlußelement-Einheit in dem Gehäuse fixierbar ist. Über den Deckel läßt sich die Deckel-Anschlußelement-Einheit an dem Gehäuse fixieren. Für eine weitere Fixierung innerhalb des Gehäuses kann das Halteelement sorgen, welches insbesondere eine Kippsicherung für den Meßfühler in dem Gehäuse darstellt, so daß dieser exakt zur Längsrichtung des Gehäuses ausgerichtet in diesem positioniert ist.

Bei einer konstruktiv einfachen Ausführungsform ist das Halteelement als Halteplatte ausgebildet, deren Breite im wesentlichen einem Innendurchmesser des Gehäuses an einer Halteposition der Deckel-Anschlußelement-Einheit entspricht, wobei insbesondere diese Halteposition auf einem Durchmesser des Gehäuses liegt. Dadurch ist die Halteplatte gegen eine Verschiebung innerhalb des Gehäuses quer zu der Längsrichtung des Gehäuses gesichert, da ihre Beweglichkeit durch Anlage an Innenwände des Gehäuses begrenzt ist.

Zur weiteren Sicherung der Position des Halteelements sind insbesondere ein oder mehrere Klemmelemente vorgesehen, mittels welchen das Halteelement an dem Gehäuse mit diesem verklemmbar ist. Die Klemmelemente sind dabei so ausgebildet, daß das Halteelement unter Kraftaufwand in das Gehäuse einschiebbar ist, dabei aber in der Halteposition die Klemmelemente das Halteelement innerhalb des Gehäuses noch zusätzlich mit Gehäusewänden verklemmen.

Weiterhin ist es günstig, wenn das Halteelement ein abgeschrägtes vorderes Ende zur Erleichterung der Einführbarkeit in das Gehäuse aufweist.

Insbesondere ist es vorgesehen, daß eine interne Schaltungsanordnung auf dem Halteelement sitzt, da dort ein entsprechender Anordnungsraum für diese Schaltungsanordnung bereitgestellt ist.

Um eine gute Klemmverbindung zwischen dem Deckel und dem Gehäuse zu erhalten, ist dieser vorteilhafterweise mindestens teilweise rändelartig ausgebildet, d. h. ist mit einer entsprechenden Randriffelung versehen, die zum einen den Einschub in das Gehäuse erlaubt und zum anderen für die Verklemmung mit dem Gehäuse sorgt.

Bei einer Variante einer Ausführungsform weist der Deckel der Deckel-Anschlußelement-Einheit einen Stutzen zur Aufnahme eines Steckereinsatzes auf. Ein solcher Stutzen läßt sich insbesondere einstückig an dem Deckel ausbilden. Der Steckereinsatz läßt sich dann in einen solchen Stutzen einstecken und mit diesem verkleben, wobei insbesondere noch eine integrierte Dichtung zwischen Steckereinsatz und Stutzen zur Abdichtung des Anschlußelements vorgesehen sein kann.

Es kann vorgesehen sein, daß der Steckereinsatz über einen Filmleiter mit einer internen Schaltungsanordnung auf der Deckel-Anschlußelement-Einheit verbunden ist und daß weiterhin der Meßfühler über einen Filmleiter mit der Schaltungsanordnung verbunden ist. Bei einer Variante einer Ausführungsform ist dabei der Steckereinsatz selber mit der Halteplatte der Deckel-Anschlußelement-Einheit verbunden und der Meßfühler wiederum wird dann mit der Halteplatte über einen weiteren Filmleiter verbunden, so daß sich die Deckel-Anschlußelement-Einheit getrennt herstellen läßt und sich anschließend der Meßfühler mechanisch und elektrisch an dieser fixieren läßt, um so wiederum die Deckel-Anschlußelement-Meßfühler-Einheit herzustellen.

Ganz besonders vorteilhaft ist es, wenn der Deckel der Deckel-Anschlußelement-Einheit aus einem metallischen Material hergestellt ist, welches insbesondere eine hohe elektrische und/oder thermische Leitfähigkeit aufweist. Dadurch läßt sich zum einen eine hohe EMV-Festigkeit erreichen und zum anderen läßt sich auch die damit einhergehende hohe thermische Wärmeleitfähigkeit des Deckels ausnutzen, um bei entsprechendem thermischen Kontakt mit der Schaltungsanordnung eine Wärmesenke darzustellen und somit eine schnelle Einstellung des thermischen Gleichgewichts insbesondere auch während des Betriebs der Wegaufnehmervorrichtung zu erreichen. Geeignete Materialien zur Herstellung des Deckels sind beispielsweise Messing, Zink oder Aluminium.

Es hat sich als vorteilhaft erwiesen, wenn ein Stopfen aus einem porösen Material im Gehäuse an oder in der Nähe des dem Deckel der Deckel-Anschlußelement-Einheit abgewandten Endes angeordnet ist. Mittels eines solchen porösen Materials wie Styropor oder Moosgummi läßt sich der Innenraum des Gehäuses besser thermisch gegenüber dem Außenraum isolieren, wobei das freie Volumen im Innenraum des Gehäuses verringert wird. Es hat sich gezeigt, daß dadurch die Warmlaufphase der erfindungsgemäßen Vorrichtung verbessert ist, das heißt die stationären Betriebsbedingungen schneller und sicherer erreicht werden.

Insbesondere ist die Deckel-Anschlußelement-Einheit so ausgebildet, daß guter thermischer Kontakt zwischen dem Deckel und einer internen Schaltungsanordnung, welche an der Deckel-Anschlußelement-Einheit sitzt, herrscht. Dadurch kann der Deckel als Wärmesenke wirken, um so eine schnelle Einstellung des thermischen Gleichgewichts zu bewirken.

Insbesondere ist es vorgesehen, daß zur Wegstreckenermittlung die Laufzeit mechanischer Wellen ermittelt wird, welche auf dem Meßfühler propagieren, wobei der Meßfühler insbesondere ein magnetostriktiv-wirkender Meßfühler ist, und der Positionsgeber ein Magnet ist.

Ganz besonders vorteilhaft ist es, wenn das Gehäuse zylindrisch ausgebildet ist mit mindestens einem offenen Ende für die Deckel-Anschlußelement-Einheit. Ein solches zylindrisches Gehäuse läßt sich auf einfache Weise herstellen, beispielsweise über Strangpressung, und läßt sich auch auf einfache Weise bearbeiten. Auch für einen Anwender ist diese Form vorteilhaft, da er über das Gehäuse die Wegaufnehmervorrichtung in eine bestimmte Position drehen kann, um diese endgültig für eine Anwendung zu positionieren. Die zylindrische Ausbildung ist auch erreicht, wenn das Gehäuse einen polygonalen Querschnitt mit einer Vielzahl von Ecken aufweist (beispielsweise zehn Ecken oder mehr).

Insbesondere ist das andere Ende des Gehäuses, welches dem Ende abgewandt ist, welches mit der Deckel-Anschlußelement-Einheit verschlossen ist, durch ein separates Deckelelement geschlossen. Dadurch läßt sich dann das Gehäuse rohrförmig herstellen und die jeweiligen offenen Enden werden durch getrennte Deckel geschlossen. Dadurch ist also die Herstellung des Gehäuses vereinfacht.

Günstigerweise ist das Gehäuse rohrförmig ausgebildet, um es so auf einfache Weise herstellen zu können.

Ganz besonders vorteilhaft ist es, wenn das Gehäuse auf einer äußeren Oberfläche im wesentlichen kantenfrei ausgebildet ist und/oder im wesentlichen rotationssymmetrisch zu einer Längsachse ausgebildet ist.

Eine Ausbildung mit hohem Symmetriegrad läßt sich auch durch ein Gehäuse mit polygonalem Querschnitt erreichen.

Ganz besonders günstig ist es, wenn das Gehäuse auf seiner äußeren Oberfläche eine Abflachung aufweist, mittels der das Gehäuse auf eine Unterlage aufsetzbar ist. Dadurch wird die Handhabbarkeit der Wegaufnehmervorrichtung während der Herstellung und auch während der Fixierung an einer Anwendung erhöht, da ein Wegrollen des Gehäuses vermeidbar ist. Die Formulierung "im wesentlichen" bezüglich der Kantenfreiheit und der rotationssymmetrischen Ausbildung oben bezieht sich dabei auf diese Abflachung der äußeren Oberfläche.

Weiterhin ist es günstig, wenn eine Gehäuseseite eine sich in der Längsrichtung erstreckende Markierung aufweist, welche eine Meßseite anzeigt. Ein Anwender erkennt dann unmittelbar, wo die Meßseite liegt und wie er bei der Fixierung der Wegaufnehmervorrichtung an einer Maschine das Gehäuse verdrehen muß, um bezüglich eines Positionsgebers eine optimale Kopplung zu erhalten. Es kann auch eine oder mehrere Quermarkierungen vorgesehen sein, um am Gehäuse direkt den Meßbereich zu markieren. Insbesondere wird über eine Quermarkierung steckerseitig der Anfang des Meßbereichs markiert.

Insbesondere weist dabei der Meßfühler einen minimalen Abstand zu der Markierung auf, um so eben die Meßseite anzuzeigen.

Es kann vorgesehen sein, daß die Markierung durch eine Rille gebildet ist. Insbesondere kann es auch vorgesehen sein, daß die Markierung durch eine Abflachung gebildet ist, wobei die Rille selber auch eine entsprechende Abflachung darstellen kann, um ein Wegrollen des Gehäuses zu verhindern.

Weiterhin ist es vorgesehen, daß der Positionsgeber relativ zu dem Gehäuse frei fliegend ist, so daß ein Anwender umfangreiche Variationsmöglichkeiten bezüglich der relativen Positionierung zwischen Positionsgeber und Wegaufnehmervorrichtung hat.

Die erfindungsgemäße Wegaufnehmervorrichtung läßt sich auf einfache Weise an einer Anwendung fixieren, wenn eine oder mehrere Fixierungsaufnahmen vorgesehen sind, welche das Gehäuse mindestens teilweise umfassen.

Insbesondere ist dabei eine Fixierungsaufnahme als Halteklammer ausgebildet. Bei einer ersten Ausführungsform ist eine Halteklammer so bügelförmig ausgebüdet, daß das Gehäuse zwischen einem Haltebügel der Halteklammer und der Anwendung fixierbar ist, d. h. das Gehäuse läßt sich über die Halteklammer mit einer entsprechenden Oberfläche der Anwendung verspannen.

Bei einer zweiten Ausführungsform ist eine Halteklammer schellenförmig ausgebildet, wobei das Gehäuse in der Halteschelle fixierbar ist. Das Gehäuse wird damit in die Halteschelle eingelegt und in dieser Halteschelle gehalten.

Es kann dabei vorgesehen sein, daß über eine oder mehrere Fixierungsschrauben zwischen dem Gehäuse und der Halteschelle die Wegaufnehmervorrichtung an der Halteklammer fixierbar ist, d. h. insbesondere die Aufnahmestellung des Gehäuses in der Halteklammer gesichert wird.

Bei einer dritten Ausführungsform umfaßt eine Halteklammer ein erstes Halteelement mit einer ersten Halteausnehmung und ein zweites Halteelement mit einer zweiten Halteausnehmung, wobei das Gehäuse der Wegaufnehmervorrichtung zwischen den beiden Halteelementen in den beiden Halteausnehmungen gehalten ist.

Günstigerweise sind dabei die beiden Halteelemente über eine oder mehrere Fixierungsschrauben miteinander fixierbar, um so das Gehäuse in den Halteausnehmungen zu verklemmen. Die Fixierungsschrauben könnten dabei gleichzeitig dazu dienen, die Halteklammer an einer Maschine zu fixieren.

Alternativ kann es vorgesehen sein, daß das Gehäuse der Wegaufnehmervorrichtung in einer Ausnehmung an einer Anwendung fixierbar ist. Da das Gehäuse im wesentlichen rotationssymmetrisch ausgebildet ist, läßt sich eine solche Ausnehmung auf einfache Weise herstellen, beispielsweise über Ausbohrung.

Weiterhin ist es günstig, wenn das Gehäuse aus einem Material hoher elektrischer und/oder thermischer Leitfähigkeit wie beispielsweise Messing, Zink oder Aluminium hergestellt ist, um so eine hohe EMV-Festigkeit zu erhalten.

Die Erfindung betrifft ferner ein Verfahren zur Herstellung einer Wegaufnehmervorrichtung wie oben beschrieben, wobei hier die Aufgabe zugrundeliegt, ein Verfahren zu schaffen, mittels welchem die Wegaufnehmervorrichtung auf möglichst einfache und kostengünstige Weise herstellbar ist.

Erfindungsgemäß wird dazu die Deckel-Anschlußelement-Einheit hergestellt und diese Einheit in das Gehäuse eingeschoben.

Das erfindungsgemäße Verfahren weist bereits die im Zusammenhang mit der erfindungsgemäßen Vorrichtung erläuterten Vorteile auf.

Weitere vorteilhafte Ausgestaltungen des erfindungsgemäßen Verfahrens wurden ebenfalls bereits im Zusammenhang mit der erfindungsgemäßen Vorrichtung erläutert.

Insbesondere ist es vorteilhaft, wenn vor Einschub in das Gehäuse der Meßfühler an der Deckel-Anschlußelement-Einheit fixiert wird, um so eine Deckel-Anschlußelement-Meßfühler-Einheit zu bilden. Diese letztgenannte Einheit wiederum läßt sich als Ganzes handhaben und austesten, bevor schließlich die Wegaufnehmervorrichtung hergestellt wird.

Aus dem gleichen Grund ist es dann vorteilhaft, wenn eine interne Schaltungsanordnung auf der Deckel-Anschlußelement-Einheit hergestellt wird.

Vorteilhafterweise wird dabei die Deckel-Anschlußelement-Einheit mit dem Meßfühler vor Einschub in das Gehäuse getestet.

Die nachfolgende Beschreibung bevorzugter Ausführungsformen dient im Zusammenhang mit der Zeichnung der näheren Erläuterung der Erfindung. Es zeigen:
- Figur 1: eine perspektivische Ansicht eines Ausführungsbeispiels einer erfindungsgemäßen Wegaufnehmervorrichtung in Explosionsdarstellung;
- Figur 2: eine perspektivische Ansicht einer Deckel-Anschlußelement-Einheit gemäß Figur 1;
- Figur 3: eine seitliche Teilschnittansicht der Wegaufnehmervorrichtung gemäß Figur 1, bei der die Deckel-Anschlußelement-Einheit an dem Gehäuse fixiert ist;
- Figur 4: eine schematische Ansicht eines magnetostriktiven Meßfühlers;
- Figur 5: ein erstes Ausführungsbeispiel einer Halteklammer;
- Figur 6: ein zweites Ausführungsbeispiel einer Halteklammer;
- Figur 7: ein drittes Ausführungsbeispiel einer Halteklammer;
- Figur 8: ein weiteres Ausführungsbeispiel einer Fixierungsmöglichkeit einer erfindungsgemäßen Wegaufnehmervorrichtung an einer Anwendung;
- Figur 9: eine schematische Darstellung der Positionierungsmöglichkeiten einer erfindungsgemäßen Wegaufnehmervorrichtung an einer Anwendung und
- Figur 10: eine perspektivische Teilansicht einer Variante einer Ausführungsform ohne Gehäuse, bei dem ein Stopfen an einer Halteplatte angeordnet ist.

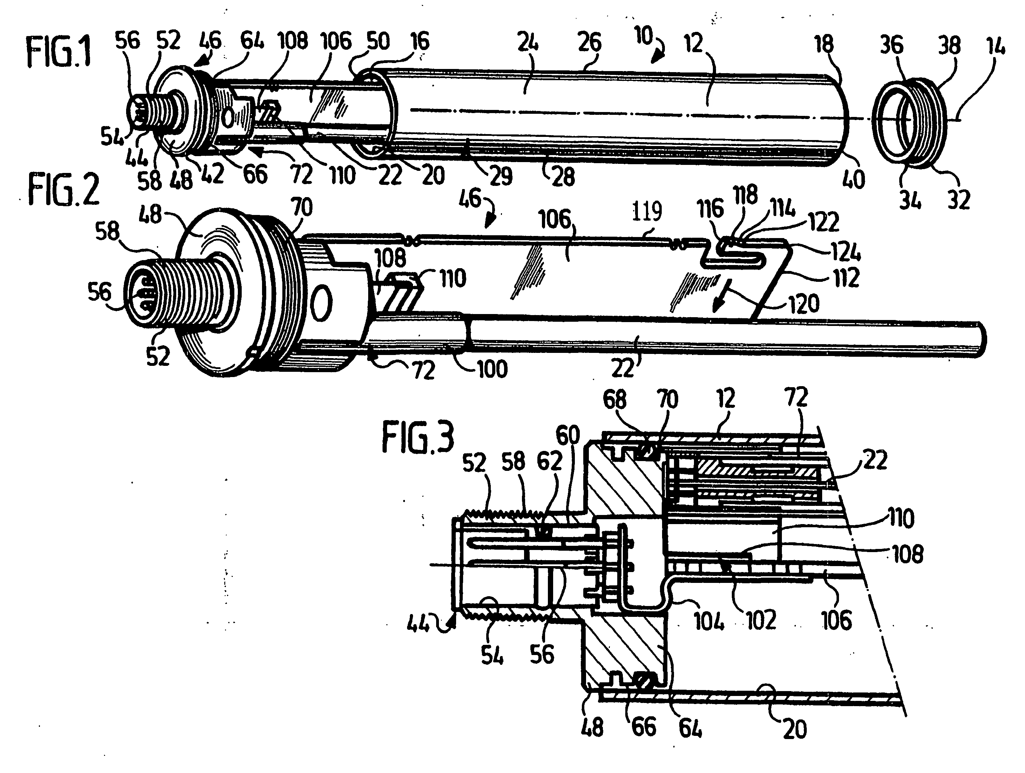

Ein Ausführungsbeispiel einer erfindungsgemäßen Wegaufnehmervorrichtung, welche in Figur 1 als Ganzes mit 10 bezeichnet ist, umfaßt ein Gehäuse 12, welches sich in einer Längsrichtung 14 erstreckt. Das Gehäuse 12 ist insbesondere zylindrisch rohrförmig ausgebildet mit einem ersten offenen Ende 16 und einem gegenüberliegenden zweiten offenen Ende 18. In dem Gehäuse 12 ist zwischen den beiden Enden 16 und 18 ein Gehäuseinnenraum 20 gebildet, welcher unter anderem einen Meßfühler 22 aufnimmt.

Das Gehäuse 12 ist im wesentlichen rotationssymmetrisch um eine Längsachse parallel zu der Längsrichtung 14 bzw. mit dieser zusammenfallend ausgebildet. Eine Oberfläche 24 des Gehäuses 12 ist dabei außerhalb seiner Stirnkanten im wesentlichen kantenfrei ausgebildet.

Bevorzugterweise weist die Oberfläche 24 in der Längsrichtung 14 eine leichte Abflachung 26 auf, die es ermöglicht, das Gehäuse 12 insbesondere während des Produktionsprozesses abzulegen bzw. zu positionieren, ohne daß dieses wegrollt.

Ferner ist die Oberfläche 24 des Gehäuses 12 mit einer Markierung 28 beispielsweise in der Form einer Rille versehen, wobei der Meßfühler 22 so in dem Gehäuse 12 angeordnet ist, daß dessen Abstand zu der Markierung 28 minimiert ist. Die Markierung 28 zeigt dann die aktive Seite bzw. aktive Fläche der Wegaufnehmervorrichtung 10 an, d. h. die Meßseite, und erleichtert damit einem Anwender die Positionierung der erfindungsgemäßen Wegaufnehmervorrichtung 10 an einer Anwendung, beispielsweise einer Werkzeugmaschine oder dergleichen. Es kann auch eine Quermarkierung 29 vorgesehen sein, um am Gehäuse den Meßbereich und insbesondere dessen Anfang anzuzeigen. Eine weitere Markierung kann das Ende des Meßbereichs am Gehäuse 12 anzeigen.

Es kann dabei vorgesehen sein, daß die Abflachung 26 über die Markierung 28 gebildet ist.

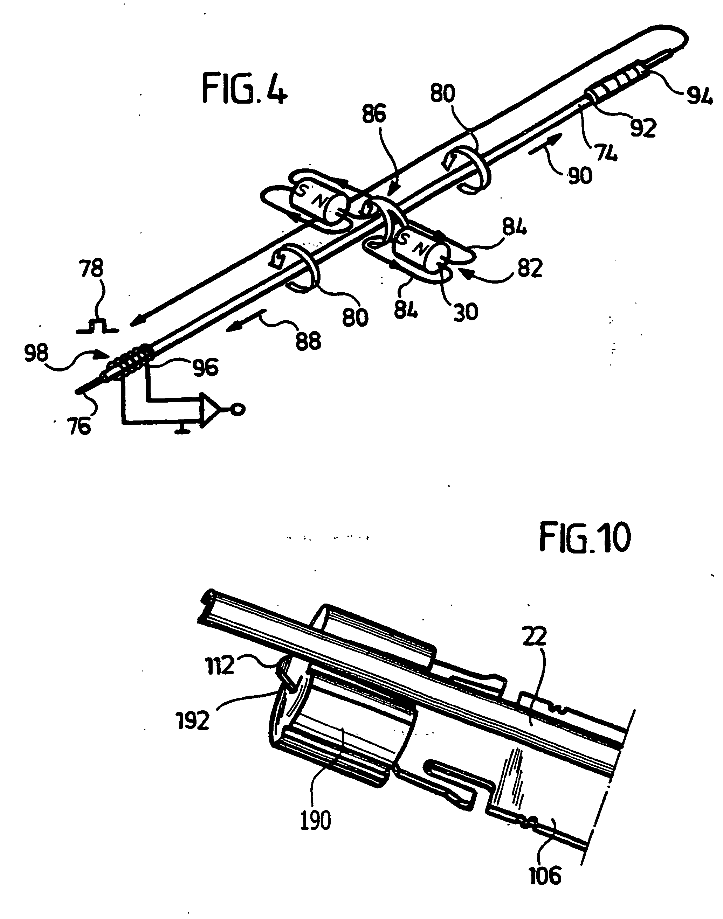

Das Gehäuse 12 ist vorzugsweise aus einem metallischen Material hoher elektrischer und/oder thermischer Leitfähigkeit hergestellt, so daß eine hohe EMV-Festigkeit vorliegt und damit präzise Meßergebnisse erhalten werden können. Das Material für das Gehäuse 12 ist dabei ein nichtmagnetisches Metall, um als Positionsgeber einen Magneten 30 (vgl. Figur 4 und Figur 10) einsetzen zu können. Es kann dabei ein Permanentmagnet oder ein Elektromagnet zum Einsatz kommen. Beispielsweise wird als Material für das Gehäuse 12 Aluminium verwendet.

Der Positionsgeber ist dabei an einem bewegten Maschinenteil fixiert und bewegt sich auf einer parallel zur Wegaufnehmervorrichtung 10 (d. h. parallel zur Längsrichtung 14) verlaufenden Bahn, das heißt freifliegend zu dem Gehäuse 12. Er kann aber auch auf dem Gehäuse geführt sein. Dazu ist der Positionsgeber dann beispielsweise bügelförmig ausgebildet.

An seinem offenen Ende 18 ist das Gehäuse 12 über einen Deckel 32 verschlossen, welcher einen Eintauchbereich 34 aufweist, mit welchem dieser Deckel 32 in den Innenraum des Gehäuses 12 eintaucht und über den der Deckel 32 an dem Gehäuse 12 fixiert ist. Insbesondere ist dieser Eintauchbereich rändelförmig ausgebildet, so daß der Deckel 32 schraubenfrei an dem Gehäuse 12 fixierbar ist. Vorteilhafterweise ist der Innenraum des Gehäuses 12 mindestens in dem Bereich, in dem der Deckel 12 fixiert wird, im wesentlichen rotationssymmetrisch ausgestaltet und der Deckel 32 mit seinem Eintauchbereich 34 entsprechend ausgestaltet, um so Deckel 32 und Gehäuse 12 auf einfache und dichte Weise miteinander verbinden zu können.

Es ist dabei vorgesehen, daß zwischen dem Eintauchbereich 34 und entsprechenden Innenwänden des Gehäuses 12 ein oder mehrere O-Ringe 36 als Dichtungen angeordnet sind, um den Innenraum 20 von dem Außenraum an dem Ende 18 abzudichten. Insbesondere sind dabei der oder die O-Ringe 36 in den Eintauchbereich 34 des Deckels 32 integriert.

Der Deckel 32 weist anschließend an den Eintauchbereich 34 und insbesondere einstückig mit ihm gebildet eine Deckelscheibe 38 auf mit einem Durchmesser, der im wesentlichen dem Durchmesser des Gehäuses 12 quer zur Längsrichtung 14 entspricht, so daß die Deckscheibe 38 nicht über die Oberfläche 24 des Gehäuses 12 hinausragt und zum anderen eine Stirnseite 40 des Gehäuses 12 an dem Ende 18 mindestens teilweise abdeckt.

Der Deckel 32 ist dabei wiederum bevorzugterweise aus einem Metall hoher elektrischer und/oder thermischer Leitfähigkeit wie Messing hergestellt, um eine hohe EMV-Festigkeit zu bewirken.

Zum Verschluß des Gehäuses 12 an dem Ende 16 ist ein Deckel 42 vorgesehen, welcher zusammen mit einem elektrischen Anschlußelement 44 eine Deckel-Anschlußelement-Einheit 46 bildet, die als Ganzes handhabbar ist und die an dem Gehäuse 12 fixierbar ist.

Zur Bildung der Deckel-Anschlußelement-Einheit 46 weist der Deckel 42 eine Deckelscheibe 48 auf, mittels welcher eine Stirnseite 50 des Gehäuses 12 an dem Ende 16 mindestens teilweise abdeckbar ist. Einstückig an der Deckelscheibe 48 ist sich in der Längsrichtung 14 erstreckend, und zwar von dem Ende 18 abgewandt, ein Stutzen 52 gebildet, welcher einen zylindrischen Innenraum 54 zur Aufnahme eines Steckereinsatzes 56 aufweist (Figuren 1 bis 3). Der Stutzen 52 ist dabei an seiner äußeren Oberfläche mit einem Außengewinde 58 versehen, so daß ein Gegenstecker zu dem Steckereinsatz 56 auf den Stutzen 52 aufschraubbar ist. Der Steckereinsatz 56 ist in dem Stutzen 52 gehalten und beispielsweise in diesem verklebt. In dieses ist insbesondere ein EMV-Filter integriert, um elektromagnetische Verzerrungen, die über das Anschlußelement 44 einstreuen könnten, auszufiltern.

Zwischen dem Steckereinsatz 56 und den Innenraum 54 bildenden Innenwänden 60 des Stutzens 52 ist dabei als Dichtung ein O-Ring 62 angeordnet, um das Gehäuse 12 von dem Außenraum an dem Stutzen 52 abzudichten.

An der Deckelscheibe 48 sitzt einstückig mit dieser verbunden in Richtung des Endes 18 weisend ein Eintauchelement 64, über welches der Deckel 42 der Deckel-Anschlußelement-Einheit 46 in den Innenraum 20 des Gehäuses 12 eintaucht. Dadurch ist an dem Deckel 42 ein Eintauchbereich 66 gebildet, welcher insbesondere rändelförmig ausgebildet ist.

Die Deckel-Anschlußelement-Einheit 46 wird dabei über das Eintauchelement 64 in das Gehäuse 12 gesteckt und über die rändelförmige Ausbildung des Eintauchbereiches 66 an dem Gehäuse 12 gehalten, wobei diese Fixierung schraubenfrei erfolgt, so daß die Zusammensetzung der erfindungsgemäßen Wegaufnehmervorrichtung 10 und der Verschluß des Gehäuses 12 über einen Aufsteckvorgang erfolgt.

Zur Herstellung der Dichtigkeit gegenüber dem Außenraum ist es vorgesehen, daß zwischen dem Eintauchbereich 66 und entsprechenden Innenwänden des Gehäuses 12 ein O-Ring 68 (Figur 3) angeordnet ist.

Zur Aufnahme des O-Rings 68 ist in dem Eintauchbereich 66 eine entsprechende Nut 70 angeordnet.

An dem Eintauchelement 64 der Deckel-Anschlußelement-Einheit 46 sitzt in Richtung des Endes 18 weisend ein Halter 72 für den Meßfühler 22. Dieser Meßfühler ist, wie in Figur 4 gezeigt, als Wellenleiter 74 ausgebildet und beispielsweise rohrförmig ausgebildet oder liegt in Drahtform vor. Beispielsweise ist er aus einer Nickel-Eisen-Legierung hergestellt. In ihn ist ein Kupferleiter 76 eingefädelt.

Ein von einer Meßschnittstelle stammender Erregerstromimpuls löst als Meßsignal eine Messung aus. Der Erregerstromimpuls 78 wird dabei mittels eines Startsignals ausgelöst. Der Erregerstromimpuls 78 erzeugt ein zirkulares Magnetfeld 80, welches aufgrund weichmagnetischer Eigenschaften des Wellenleiters 74 in diesem gebündelt wird. An einer Meßstelle 82 des Wellenleiters 74 ist der Positionsgeber 30, beispielsweise ein Permanentmagnet, angeordnet, wobei dessen Magnetfeldlinien 84 rechtwinklig zum zirkularen Magnetfeld 80 verlaufen und ebenfalls im Wellenleiter 74 gebündelt sind.

In einem Bereich 86, in welchem sich die beiden Magnetfelder 80 und 84 überlagern, entsteht im Mikrobereich des Gefüges des Wellenleiters 74 eine elastische Verformung aufgrund von Magnetostriktion. Diese elastische Verformung wiederum bewirkt eine sich längs des Wellenleiters 74 in entgegengesetzte Richtungen 88, 90 ausbreitende elastische Welle. Die Ausbreitungsgeschwindigkeit dieser Welle im Wellenleiter 74 liegt in der Größenordnung von ca. 2800 m/s und ist weitgehend unempfindlich gegenüber Umwelteinflüssen.

An einem Ende 92 des Wellenleiters 74 ist ein Dämpfungsglied 94 vorgesehen, durch das die zu diesem Ende 92 laufende transsonare Welle dort weggedämpft wird, so daß der zurückreflektierte Anteil bei der Signaldetektion gegenüber der direkt propagierenden Welle vernachlässigbar ist.

Am anderen Ende 96 ist ein Signalwandler 98 angeordnet, welcher durch Umkehrung des magnetostriktiven Effektes und magnetische Induktion ein elektrisches Signal erzeugt und dieses an eine Meßschnittstelle liefert.

Die Wellenlaufzeit vom Entstehungsort 82 bis zum Signalwandler 98 ist direkt proportional zum Abstand zwischen dem Positionsgeber 30 und dem Signalwandler 98. Mittels einer Zeitmessung kann daher der Abstand zwischen dem Signalwandler 98 und dem Positionsgeber 30 mit hoher Genauigkeit bestimmt werden. Das primäre Meßsignal für diese Zeitmessung ist der Erregerstromimpuls 78 auf dem Wellenleiter 74 und sein Reaktionsimpuls, welcher zeitversetzt in Abhängigkeit von dem Abstand zwischen dem Signalwandler 98 und dem Positionsgeber 30 von dem Signalwandler 98 an die Meßschnittstelle geliefert wird.

Der Halter 72 ist nun so ausgebildet, daß er in einer zylindrischen Aufnahme 100 den Meßfühler 22 einschließlich Wellenleiter und Signalwandler 98 aufnimmt. Dadurch ist der Meßfühler 22 über den Halter 72 durch die Deckel-Anschlußelement-Einheit 46 in dem Innenraum 20 des Gehäuses 12 gehalten, d. h. derjenige Teil des Meßfühlers 22 außerhalb der Aufnahme 100 erstreckt sich in der Längsrichtung 14 in dem Gehäuse 12, d. h. erstreckt sich freitragend in diesem.

Die Position des Signalwandlers 98 in der Aufnahme 100 bestimmt den Meßbereich.

Eine interne Schaltungsanordnung, welche als Ganzes in Figur 3 mit 102 bezeichnet ist und welche unter anderem zur Ansteuerung des Meßfühlers 22 dient und dabei über das Anschlußelement 44 insbesondere mit einer externen Meßschnittstelle verbindbar ist, ist ebenfalls an der Deckel-Anschlußelement-Einheit 46 angeordnet. Dazu ist das Anschlußelement 44 über einen Filmleiter oder Drahtleiter 104 mit einer Halteplatte 106 verbunden, welche wiederum an dem Deckel 42 sitzt, und zwar an dem Eintauchelement 64 und in Richtung des Endes 18 weist. Die Halteplatte 106 ist mit den elektronischen Bauelementen der Schaltungsanordnung 102 bestückt. Von dieser Halteplatte 106 ausgehend verbindet ein weiterer Filmleiter 108 den Meßfühler 22 elektrisch mit der Halteplatte 106, das heißt mit der Schaltungsanordnung 102, und damit wiederum mit dem Anschlußelement 44. Der Filmleiter 104 ist dabei auf der einen Seite mit der Halteplatte 106 verbunden, während der Filmleiter 108 auf der gegenüberliegenden Seite mit der Halteplatte verbunden ist. Auf diese Weise läßt sich zuerst die Deckel-Anschlußelement-Einheit 46 herstellen und dabei auch über den Filmleiter 104 ein Verbindungsanschluß auf der Halteplatte 106 herstellen, während dann der Meßfühler 22 über die Aufnahme 100 an der Deckel-Anschlußelement-Einheit 46 positionierbar ist und dann über den Filmleiter 108 die elektrische Verbindung über ein entsprechendes Anschlußelement 110 und den Filmleiter 108 ausbildbar ist.

Die Schaltungsanordnung 102 ist so bezüglich der Deckel-Anschlußelement-Einheit 46 angeordnet, daß guter thermischer Kontakt eben zwischen dem Deckel 42 und der Schaltungsanordnung 102 herrscht, so daß thermisches Gleichgewicht schnell erreichbar ist. Der Deckel 42 ist dabei vorzugsweise aus einem Metall hoher elektrischer und/oder thermischer Leitfähigkeit hergestellt.

Die Halteplatte 106 erstreckt sich in Längsrichtung 14 zu dem Ende 18 hin und weist dabei eine Länge auf, welche beispielsweise der halben Länge oder zwei Drittel der Länge des Gehäuses 12 entspricht. Eine Breite der Halteplatte 106 quer zur Längsrichtung 14 entspricht im wesentlichen einem Innendurchmesser des Gehäuses 12. Die Halteplatte 106 ist an einem Durchmesser des Deckels 42 angeordnet, d. h. eine Längsachse der Halteplatte 106 fällt mit einer Symmetrieachse des Deckels 42 zusammen. Auf diese Weise läßt sich die Deckel-Anschlußelement-Einheit 46 in dem Gehäuse 12 über die Halteplatte 106 fixieren, die eine Verrückung der Deckel-Anschlußelement-Einheit 46 in dem Gehäuse 12 verhindert. Die Halteplatte 106 bewirkt also eine zusätzliche Fixierung und insbesondere Verklemmung der Deckel-Anschlußelement-Einheit 46 mit dem Gehäuse 12.

In der Nähe ihres vorderen Endes 112 weist die Halteplatte 106 gegenüberliegende Klemmelemente 114 auf, welche quer zur Längsrichtung 14 elastisch beweglich ausgebildet sind. Ein Klemmelement 114 weist dabei eine Klemmnase 116 auf, deren seitliche Oberfläche 118 im nicht kraftbeaufschlagten Zustand über eine restliche Seitenfläche 119 der Halteplatte 106 hinausragt.

Wird die Halteplatte 106 in den Innenraum 20 des Gehäuses 12 geschoben, dann wird dadurch die Klemmnase 116 während des Hineinschiebens der Deckel-Anschlußelement-Einheit 46 in das Gehäuse 12 in eine Richtung 120 quer zur Längsrichtung gedrückt. Andererseits übt dann das Klemmelement 114 in Gegenrichtung zu der Richtung 120 eine Kraft auf entsprechende Innenwände des Gehäuses 12 aus und bewirkt dadurch eine Fixierung der Halteplatte 106 in dem Gehäuse 12, wenn entsprechend keine Kraft mehr in Längsrichtung 14 ausgeübt wird, d. h. wenn die Deckel-Anschlußelement-Einheit 46 über ihren Eintauchbereich 66 an dem Gehäuse fixiert ist.

Die Oberfläche 118 weist eine schiefe Ebene 122 auf, über die eben beim Einschub der Deckel-Anschlußelement-Einheit 46 mit der Halteplatte 106 eine Klemmnase 116 in der Richtung 120 beweglich ist.

An seinem vorderen Ende 112 ist weiterhin die Halteplatte 106 mit einer Abschrägung 124 versehen, welche das Einführen der Deckel-Anschlußelement-Einheit 46 in das Gehäuse 12 erleichtert.

Erfindungsgemäß wird zur Herstellung der Wegaufnehmervorrichtung 10 die Deckel-Anschlußelement-Einheit 46 hergestellt, der Meßfühler mit dieser mechanisch, und zwar über die Aufnahme 100, und elektrisch über den Filmleiter 108 und das Anschlußelement 110 verbunden. Dadurch ist eine in Figur 2 als Ganzes mit 126 bezeichnete Deckel-Anschlußelement-Meßfühler-Einheit gebildet. Diese läßt sich separat testen.

Nach Abschluß der entsprechenden elektrischen Tests wird diese Einheit 126 in das Gehäuse 12 eingesetzt, und zwar eben als Einheit, d. h. als Ganzes, von dem offenen Ende 16 her in das Gehäuse 12 eingeschoben. Es wird dabei darauf geachtet, daß der Meßfühler 22 auf die Markierung 28 hin ausgerichtet ist, d. h. daß der Abstand minimal ist.

Über den Rändelbereich des Eintauchbereichs 66 wird dann schraubenfrei die Deckel-Anschlußelement-Einheit 46 an dem Gehäuse 12 fixiert, wobei die Halteplatte 106 mit ihren Klemmelementen 114 für eine zusätzliche Klemmfixierung und auch Positionsfixierung (bezüglich Richtungen, welche quer zu der Richtung 120 und der Längsrichtung 14 liegen) sorgt. Auf diese Weise wird zum einen der Meßfühler 22 sich in der Längsrichtung 14 des Gehäuses 12 erstreckend sicher in diesem positioniert und zum anderen wird dabei das Gehäuse 12 durch den Deckel 42 verschlossen. Gleichzeitig ist bereits die Verbindung des Anschlußelements 44 mit dem Meßfühler 22 hergestellt.

Das vordere Ende 18 wird dabei wie oben beschrieben durch den Deckel 32 geschlossen.

Zur Herstellung der Deckel-Anschlußelement-Einheit und der Schaltungsanordnung 102 können die einzelnen Elemente (Deckel 42, Anschlußelement 44, Eintauchelement 64, Halteplatte 106) insbesondere schraubenlos verbunden sein, beispielsweise über Prägung, Vernietung, Verpressung oder Verklebung.

Durch die O-Ring-Dichtung zwischen dem Eintauchelement 64 und dem Gehäuse 12 läßt sich dabei mit geringem Aufwand eine hohe Schutzart (wie IP 67) erreichen.

Bei einer Variante einer Ausführungsform ist es vorgesehen, daß in dem Gehäuse 12 ein Halter für den Meßfühler 22 angeordnet ist (in der Zeichnung nicht gezeigt). Beispielsweise ist dazu das Gehäuse mittels Strangpressung hergestellt und weist ein Strangpreßprofil mit einer entsprechenden Ausbohrung zur Aufnahme des Meßfühlers 22 auf. Entsprechend kann auch beispielsweise eine Nut vorgesehen sein, um die Schaltungsanordnung 102 in dem Innenraum des entsprechenden Gehäuses fixieren zu können.

Die erfindungsgemäße Wegaufnehmervorrichtung 10 läßt sich über das Gehäuse 12 an einer Anwendung, beispielsweise einer Werkzeugmaschine, fixieren. Das sich bewegende Maschinenteil, dessen Wegstrecke ermittelt werden soll und mit welchem der Positionsgeber 30 verbunden ist, ist dabei relativ zu dem Gehäuse 12 frei fliegend, d. h. die Führung für das Maschinenteil und damit dem Positionsgeber 30 ist nicht gekoppelt an die Wegaufnehmervorrichtung 10.

Es kann erfindungsgemäß vorgesehen sein, daß das Gehäuse 12 über beabstandete Halteklammern an der Anwendung fixiert ist.

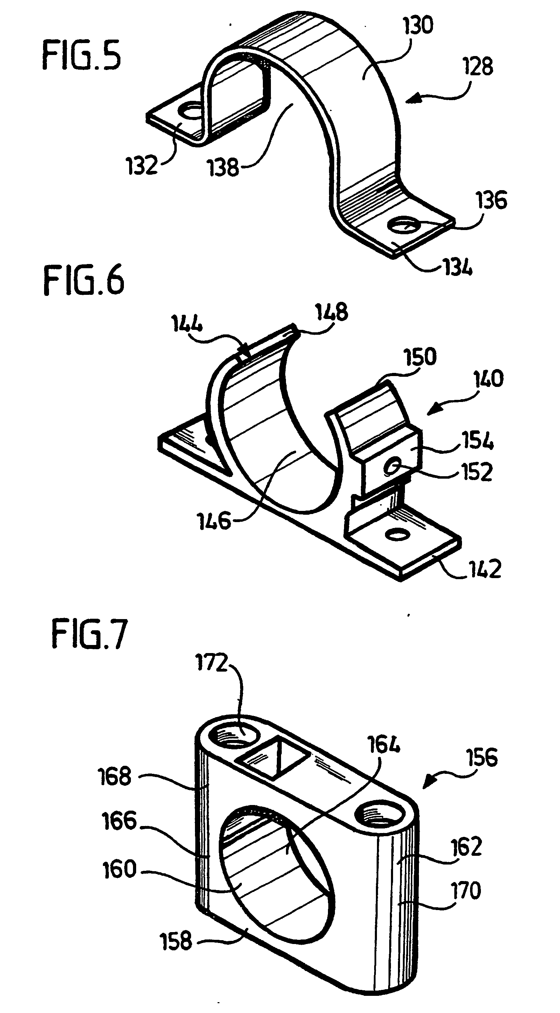

Eine erste Ausführungsform einer Halteklammer, welche in Figur 5 gezeigt und dort als Ganzes mit 128 bezeichnet ist, ist bügelförmig ausgebildet mit einem Haltebügel 130, an welchem jeweils endseitig Haltelaschen 132 und 134 sitzen, in denen entsprechende Ausnehmungen 136 gebildet sind, über die die Halteklammer 128 über Schrauben oder Bolzen an der Anwendung fixierbar ist. Zwischen dem Haltebügel 130 und einer Ebene der Haltelaschen 132, 134 ist eine Fixierungsaufnahme 138 gebildet, in welche das Gehäuse 12 einlegbar ist. Der Haltebügel 130 wirkt dabei von oben (der Anwendung abgewandt) auf das Gehäuse 12 und klemmt dabei die Wegaufnehmervorrichtung 10 gegen die Anwendung, wenn entsprechend die Halteklammer 128 über die Haltelaschen 132 und 134 mit der Anwendung fixiert ist.

Bei einer zweiten Ausführungsform einer Halteklammer, welche in Figur 6 gezeigt und dort als Ganzes mit 140 bezeichnet ist, ist eine Halteplatte 142 vorgesehen, welche auf einer Anwendung positionierbar ist und an dieser beispielsweise über Schraubenverbindungen oder Bolzenverbindungen fixierbar ist. An der Halteplatte 142 sitzt und ist insbesondere einstückig an dieser gebildet eine Halteschelle 144, welche eine Fixierungsaufnahme 146 aufweist, die einen Querschnitt in der Form eines Kreisausschnitts aufweist. Entsprechende Haltewände der Halteschelle 144 sind also kreisbogenförmig ausgestaltet, wobei Enden 148, 150 beabstandet gegenüberliegen.

In diese Fixierungsaufnahme 146 ist das Gehäuse 12 der Wegaufnehmervorrichtung 10 einsetzbar. An der Halteschelle 144 ist eine durchgehende Ausnehmung 152 gebildet, über die eine Fixierungsschraube auf das Gehäuse 12 in der Fixierungsaufnahme 146 wirken kann und diese insbesondere kraftschlüssig in der Halteschelle 144 verklemmen kann. Dazu ist die Ausnehmung 152 mit einem Innengewinde versehen.

Um eine längere Gewindeführung für eine solche Fixierungsschraube zu erreichen, ist an einer Außenseite der Halteschelle 144, welche der Fixierungsaufnahme 146 abgewandt ist, um die Ausnehmung 152 ein blockförmiges Durchführungselement 154 gebildet, welches insbesondere einstückig an der Halteschelle 144 sitzt.

Es können verschiedene Anordnungen des Durchführungselements 154 und der Ausnehmung 152 vorgesehen sein, d. h. eine Längsachse der Ausnehmung 152 kann unterschiedliche Winkelstellungen zu der Halteplatte 142 je nach Typ der Halteklammer 140 aufweisen. (Je nach Anwendung kann es vorteilhafter sein, daß die Ausnehmung 152 einen größeren Winkel zu der Halteplatte 142 aufweist oder einen kleineren Winkel, d. h. näher an der Halteplatte 142 liegt.)

Bei einer dritten Ausführungsform einer Halteklammer, welche in Figur 7 gezeigt und als Ganzes dort mit 156 bezeichnet ist, ist ein erstes Halteelement 158 mit einer halbrunden ersten Halteausnehmung 160 und ein zweites Halteelement 162 mit einer halbrunden zweiten Halteausnehmung 164 vorgesehen, wobei die beiden Halteausnehmungen 160, 164 zusammen eine Fixierungsaufnahme für das Gehäuse 12 der erfindungsgemäßen Wegaufnehmervorrichtung 10 bilden.

Bei dem in Figur 7 gezeigten Ausführungsbeispiel sind dabei die beiden Halteelemente 158 und 162 jochförmig ausgebildet und an einem Jochbein einstückig miteinander verbunden, während an ihren jeweiligen anderen Jochbeinen 166, 168 sie nicht miteinander verbunden sind. Aufgrund einer entsprechenden elastischen Ausbildung der Halteklammer 156, insbesondere über die entsprechende Wahl des Herstellungsmaterials der Halteklammer 156, lassen sich dadurch die erste Halteausnehmung 160 und die zweite Halteausnehmung 164 einseitig schwenken mit einer Schwenkachse, die im Bereich des verbundenen Jochbeins 170 liegt. Es läßt sich dadurch der Abstand zwischen den Jochbeinen 166 und 168 variieren.

Das Gehäuse 12 wird in die Fixierungsausnehmung eingelegt. Eine mit einem Gewinde versehene Ausnehmung 172 durchdringt dabei das Jochbein 168 und das Jochbein 166 zumindest teilweise, so daß eine Fixierungsschraube die beiden Jochbeine 168 und 166 gegeneinander fixieren kann und damit das zweite Halteelement 162 auf das erste Halteelement 158 zubewegen kann, so daß eben das Gehäuse 12 der Wegaufnehmervorrichtung 10 in der Fixierungsaufnahme 160, 164 verklemmbar ist. Die entsprechende Fixierungsschraube kann gleichzeitig zur Fixierung der Halteklammer 156 an der Anwendung dienen.

Die Halteklammern 128 und 140 (Figuren 5 und 6) sind vorzugsweise aus einem metallischen Material gefertigt, während die Halteklammer 156 (Figur 7) vorzugsweise aus einem Kunststoffmaterial gefertigt ist.

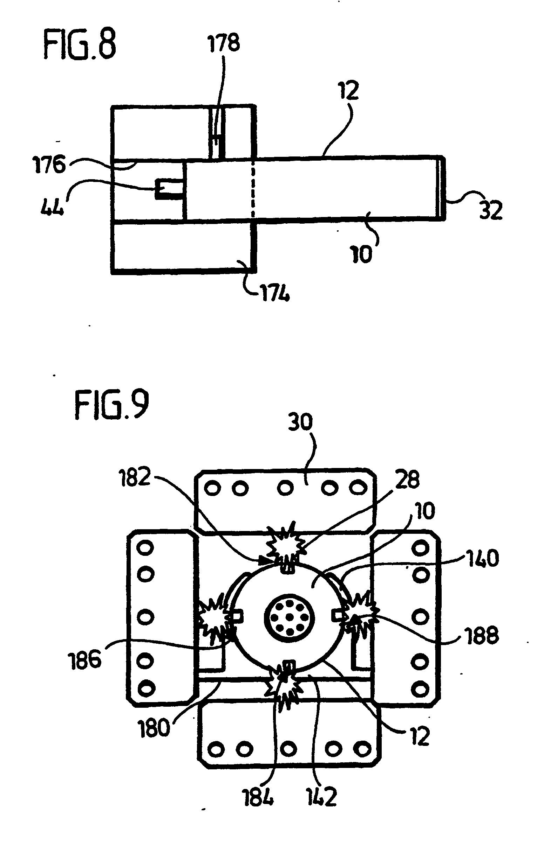

Es kann auch vorgesehen sein, daß die Anwendung eine Halteausnehmung für das Gehäuse 12 der Wegaufnehmervorrichtung 10 aufweist. Beispielsweise ist dazu in einem Maschinenblock 174 (Figur 8) eine zylindrische Ausnehmung 176 gebildet, in die die Wegaufnehmervorrichtung 10 einschiebbar ist. Über eine Fixierungsschraube 178 läßt sich dann das Gehäuse 12 der Wegaufnehmervorrichtung 10 an dem Maschinenblock fixieren. Das Gehäuse 12 läßt sich dabei als Führung für einen Positionsgeber nutzen.

Bei einer Variante einer Ausführungsform, welche in Figur 10 schematisch gezeigt ist, ist an der Halteplatte 106 an oder im Bereich ihres vorderen Endes 112 ein Stopfen 190 angeordnet, welcher insbesondere aus einem porösen Material wie Moosgummi oder Styropor hergestellt ist.

Zur Aufnahme dieses Stopfens 190 ist die Halteplatte 106 an ihrem vorderen Ende 112 mit einem Ansatz 192 versehen, auf den der Stopfen 190 aufschiebbar ist und an dem dieser dann gehalten ist.

Der Stopfen dient zur thermischen Isolierung zu dem Deckel 32 zu. Es hat sich gezeigt, daß bei Verwendung eines entsprechenden Stopfens 190 ein schnellerer Warmlauf der Wegaufnehmervorrichtung 10 erreichbar ist, das heißt, daß die stationäre Betriebsphase nach dem Einschalten schneller erreichbar ist.

Es kann vorgesehen sein, daß der Stopfen 190 auf den Ansatz 192 der Halteplatte 106 aufgesteckt wird und dann die Deckel-Anschlußelement-Einheit 46 mit der Halteplatte 106 und dem Stopfen 190 in das Gehäuse 12 hineingeschoben wird. Dies ist insbesondere vorgesehen, wenn das Gehäuse 12 an seinem vorderen Ende verschlossen ist, das heißt, wenn der entsprechende Deckel beispielsweise einstückig an dem Gehäuse gebildet ist.

Es kann aber auch vorgesehen sein, daß der Stopfen 190 auf die in dem Gehäuse 12 positionierte Halteplatte 106 von einem offenen Ende 18 her in das Gehäuse auf die Halteplatte aufgeschoben wird und anschließend der Deckel 32 an dem Gehäuse 12 fixiert wird.

Durch die rohrförmige zylindrische Ausgestaltung des Gehäuses 12 läßt sich dieses auf einfache und kostengünstige Weise herstellen. Diese Form ist auch für die Anwendung vorteilhaft, da das Gehäuse 12 und damit die Wegaufnehmervorrichtung 10 eine hohe Steifigkeit aufgrund eines optimierten Verhältnisses von Masse und Flächenträgheitsmoment aufweist.

Die Abflachung 26 erlaubt eine verbesserte Handhabbarkeit insbesondere während der Herstellung und auch während des Fixierungsvorgangs der Wegaufnehmervorrichtung 10 an einer Anwendung.

Aufgrund der im wesentlichen rotationssymmetrischen Ausgestaltung des Gehäuses 12 läßt sich, wie in Figur 8 gezeigt, die erfindungsgemäße Wegaufnehmervorrichtung 10 auf einfache Weise an einer Anwendung fixieren, wenn eine entsprechende Ausnehmung 156 vorgesehen ist. Die Wegaufnehmervorrichtung 10 läßt sich dabei vor der Fixierung in der Ausnehmung 176 in die gewünschte Sensorposition drehen, d. h. in die Position drehen, in welcher die aktive Meßseite, dem Anwender durch die Markierung 28 angezeigt, in der gewünschten Position ist.

Weiterhin lassen sich aufgrund der zylindrischen Ausgestaltung des Gehäuses 12 verschiedene Arten von Halteklammern (Figuren 5 bis 7) verwenden, um die Wegaufnehmervorrichtung 10 an einer Anwendung zu fixieren. Dadurch wiederum läßt sich die Fixierung für eine spezielle Anwendung optimieren.

Dadurch, daß der Positionsgeber 30 relativ zu dem Gehäuse 12 frei fliegend ist und die Wegaufnehmervorrichtung 10 in einer Fixierungsaufnahme vor der endgültigen Fixierung aufgrund ihrer zylindrischen Ausgestaltung drehbar ist, hat ein Anwender eine hohe Flexibilität bezüglich der Positionierung der Wegaufnehmervorrichtung 10 an einer Anwendung. Beispielsweise liegt eine erhöhte Variabilität bezüglich der Richtung des Kabelabgangs von dem Anschlußelement 44 vor.

Beispielhaft ist in Figur 9 eine Wegaufnehmervorrichtung gezeigt, welche über Halteklammern 140 an einer Anwendung 180, beispielsweise einer Maschine, fixiert ist. In einer ersten Stellung 182 ist dabei die aktive Seite der Wegaufnehmervorrichtung 10 von der Halteplatte 142 abgewandt und der Positionsgeber 30 wird parallel zur Halteplatte oberhalb der Halteklammer 140 verfahren.

Wird dagegen der Positionsgeber 30 unterhalb der Halteplatte 142 verfahren, dann läßt sich beispielsweise ausgehend von der Position 182 dies auf einfache Weise dadurch erreichen, daß das Gehäuse 12 um 180° gedreht wird. Dies ist in Figur 9 durch die Position mit dem Bezugszeichen 184 angedeutet.

Wird der Positionsgeber 30 in der Längsrichtung 14 seitlich von der Halteklammer 140 verfahren, so läßt sich ausgehend von der Position 182 das Gehäuse 12 um 90° nach links bzw. rechts drehen, um die aktive Seite der Wegaufnehmervorrichtung 10 in einen optimierten Kopplungskontakt mit dem Positionsgeber 30 zu bringen. Dies ist in Figur 9 durch die Positionen mit dem Bezugszeichen 186 und 188 angedeutet.

In den jeweiligen Meßpositionen der Wegaufnehmervorrichtung 10 ist dabei insbesondere der Abstand zwischen der Markierung 28 und dem Positionsgeber 30 bezogen auf anderen Drehpositionen des Gehäuses 12 minimiert, d. h. der Abstand zwischen dem Meßfühler 22 und dem Positionsgeber 30 ist bezogen auf andere Drehstellungen des Meßfühlers 22 minimiert.

## Patentansprüche

1. Wegaufnehmervorrichtung zur Erfassung des Wegs eines Positionsgebers (30), umfassend ein sich in einer Längsrichtung (14) erstreckendes Gehäuse (12), ein in dem Gehäuse (12) angeordneten, sich parallel zu der Längsrichtung (14) erstreckenden Meßfühler (22), an welchen der Positionsgeber (30) berührungslos koppelt, und ein an dem Gehäuse (12) angeordnetes elektrisches Anschlußelement (44),
**dadurch gekennzeichnet, daß** ein Deckel (42) zum Verschluß des Gehäuses an einem Ende (16) und das Anschlußelement (44) als Einheit (46) miteinander verbunden sind und daß diese Deckel-Anschlußelement-Einheit (46) über den Deckel (42) an dem Gehäuse (12) fixiert ist, daß der Deckel (42) einen Eintauchbereich (66) aufweist, mittels welchem er in einen Innenraum (20) des Gehäuses (12) eintaucht, daß die Deckel-Anschlußelement-Einheit (46) mittels des Eintauchbereiches (66) schraubenlos an dem Gehäuse (12) fixiert ist und daß zwischen dem Eintauchbereich (66) und einer Gehäuseinnenwand eine oder mehrere Dichtungen (68) angeordnet sind.

2. Wegaufnehmervorrichtung nach Anspruch 1, **dadurch gekennzeichnet, daß** die Deckel-Anschlußelement-Einheit (46) in das Gehäuse (12) geschoben an diesem fixiert ist.

3. Wegaufnehmervorrichtung nach Anspruch 1 oder 2, **dadurch gekennzeichnet, daß** der Meßfühler (22) durch die Deckel-Anschlußelement-Einheit in dem Gehäuse (12) gehalten ist.

4. Wegaufnehmervorrichtung nach einem der vorangehenden Ansprüche, **dadurch gekennzeichnet, daß** eine interne Schaltungsanordnung (102) der Wegaufnehmervorrichtung (10) an der Deckel-Anschlußelement-Einheit (46) angeordnet ist.

5. Wegaufnehmervorrichtung nach einem der vorangehenden Ansprüche, **dadurch gekennzeichnet, daß** die Deckel-Anschlußelement-Einheit (46) ein sich in der Längsrichtung (14) erstreckendes Halteelement (106) aufweist, mittels welchem die Deckel-Anschlußelement-Einheit (46) in dem Gehäuse (12) fixierbar ist.

6. Wegaufnehmervorrichtung nach Anspruch 5, **dadurch gekennzeichnet, daß** das Halteelement als Halteplatte (106) ausgebildet ist, deren Breite im wesentlichen einem Innendurchmesser des Gehäuses (12) an einer Halteposition der Deckel-Anschlußelement-Einheit (46) entspricht.

7. Wegaufnehmervorrichtung nach Anspruch 5 oder 6, **dadurch gekennzeichnet, daß** das Halteelement (106) ein oder mehrere Klemmelemente (114) aufweist, mittels welchen das Halteelement (106) an dem Gehäuse (12) verklemmbar ist.

8. Wegaufnehmervorrichtung nach Anspruch 7, **dadurch gekennzeichnet, daß** das Halteelement (106) ein abgeschrägtes vorderes Ende zur Erleichterung der Einführbarkeit in das Gehäuse (12) aufweist.

9. Wegaufnehmervorrichtung nach einem der Ansprüche 5 bis 8, **dadurch gekennzeichnet, daß** eine interne Schaltungsanordnung (102) auf dem Halteelement (106) sitzt.

10. Wegaufnehmervorrichtung nach einem der vorangehenden Ansprüche, **dadurch gekennzeichnet, daß** der Eintauchbereich (66) mindestens teilweise rändelartig ausgebildet ist.

11. Wegaufnehmervorrichtung nach einem der vorangehenden Ansprüche, **dadurch gekennzeichnet, daß** eine Dichtung in der Form eines O-Rings (68) ausgebildet ist.

12. Wegaufnehmervorrichtung nach einem der vorangehenden Ansprüche, **dadurch gekennzeichnet, daß** der Deckel (42) der Deckel-Anschlußelement-Einheit (46) einen Stutzen (52) zur Aufnahme eines Steckereinsatzes (56) aufweist.

13. Wegaufnehmervorrichtung nach Anspruch 12, **dadurch gekennzeichnet, daß** der Steckereinsatz (56) über einen Filmleiter (104) mit einer internen Schaltungsanordnung (102) an der Deckel-Anschlußelement-Einheit (46) verbunden ist.

14. Wegaufnehmervorrichtung nach Anspruch 13, **dadurch gekennzeichnet, daß** der Meßfühler (22) über einen Filmleiter (108) mit der Schaltungsanordnung (102) verbunden ist.

15. Wegaufnehmervorrichtung nach einem der vorangehenden Ansprüche, **dadurch gekennzeichnet, daß** der Deckel (42) der Deckel-Anschlußelement-Einheit (46) aus einem metallischen Material hergestellt ist.

16. Wegaufnehmervorrichtung nach einem der vorangehenden Ansprüche, **dadurch gekennzeichnet, daß** ein Stopfen (190) aus einem porösen Material im Gehäuse (12) an oder in der Nähe des dem Deckel (42) der Deckel-Anschlußelement-Einheit (146) abgewandten Endes angeordnet ist.

17. Wegaufnehmervorrichtung nach Anspruch 15 oder 16, **dadurch gekennzeichnet, daß** die Deckel-Anschlußelement-Einheit (46) so ausgebildet ist, daß guter thermischer Kontakt zwischen dem Deckel (42) und einer internen Schaltungsanordnung (102), welche an der Deckel-Anschlußelement-Einheit (46) sitzt, herrscht.

18. Wegaufnehmervorrichtung nach einem der vorangehenden Ansprüche, **dadurch gekennzeichnet, daß** zur Wegstreckenermittlung die Laufzeit mechanischer Wellen ermittelt wird, welche auf dem Meßfühler (22) propagieren.

19. Wegaufnehmervorrichtung nach Anspruch 18, **dadurch gekennzeichnet, daß** der Meßfühler (22) ein magnetostriktiv-wirkender Meßfühler ist, wobei der Positionsgeber (30) ein Magnet ist.

20. Wegaufnehmervorrichtung nach dem Oberbegriff von Anspruch 1 oder nach einem der vorangehenden Ansprüche, **dadurch gekennzeichnet, daß** das Gehäuse (12) zylindrisch ausgebildet ist mit mindestens einem offenen Ende (16) für die Deckel-Anschlußelement-Einheit (46).

21. Wegaufnehmervorrichtung nach einem der vorangehenden Ansprüche, **dadurch gekennzeichnet, daß** das andere Ende (18) des Gehäuses (12), welches dem Ende (16) abgewandt ist, welches mit der Deckel-Anschlußelement-Einheit (46) verschlossen ist, durch ein separates Deckelelement (32) geschlossen ist.

22. Wegaufnehmervorrichtung nach einem der vorangehenden Ansprüche, **dadurch gekennzeichnet, daß** das Gehäuse (12) rohrförmig ausgebildet ist.

23. Wegaufnehmervorrichtung nach einem der vorangehenden Ansprüche, **dadurch gekennzeichnet, daß** das Gehäuse (12) auf einer äußeren Oberfläche (24) im wesentlichen kantenfrei ausgebildet ist.

24. Wegaufnehmervorrichtung nach einem der vorangehenden Ansprüche, **dadurch gekennzeichnet, daß** das Gehäuse (12) im wesentlichen rotationssymmetrisch zu einer Längsachse ausgebildet ist.

25. Wegaufnehmervorrichtung nach einem der vorangehenden Ansprüche, **dadurch gekennzeichnet, daß** das Gehäuse (12) auf seiner äußeren Oberfläche (24) eine Abflachung (26) aufweist, mittels der das Gehäuse (12) auf eine Unterlage aufsetzbar ist.

26. Wegaufnehmervorrichtung nach einem der vorangehenden Ansprüche, **dadurch gekennzeichnet, daß** eine Gehäuseseite eine sich in der Längsrichtung (14) erstreckende Markierung (28) aufweist, welche eine Meßseite anzeigt.

27. Wegaufnehmervorrichtung nach Anspruch 26, **dadurch gekennzeichnet, daß** der Meßfühler (22) einen minimalen Abstand zu der Markierung (28) aufweist.

28. Wegaufnehmervorrichtung nach Anspruch 26 oder 27, **dadurch gekennzeichnet, daß** die Markierung (28) durch eine Abflachung (26) gebildet ist.

29. Wegaufnehmervorrichtung nach einem der vorangehenden Ansprüche, **dadurch gekennzeichnet, daß** der Positionsgeber (30) relativ zu dem Gehäuse (12) frei fliegend ist.

30. Wegaufnehmervorrichtung nach einem der vorangehenden Ansprüche, **dadurch gekennzeichnet, daß** zur Fixierung an einer Anwendung eine oder mehrere Fixierungsaufnahmen (138; 146; 160, 164; 176) vorgesehen sind, welche das Gehäuse (12) mindestens teilweise umfassen.

31. Wegaufnehmervorrichtung nach Anspruch 30, **dadurch gekennzeichnet, daß** eine Fixierungsaufnahme als Halteklammer (128; 140; 156) ausgebildet ist.

32. Wegaufnehmervorrichtung nach Anspruch 31, **dadurch gekennzeichnet, daß** eine Halteklammer (128) so bügelförmig ausgebildet ist, daß das Gehäuse (12) zwischen einem Haltebügel (130) der Halteklammer (128) und der Anwendung fixierbar ist.

33. Wegaufnehmervorrichtung nach Anspruch 32, **dadurch gekennzeichnet, daß** eine Halteklammer (140) schellenförmig ausgebildet ist, wobei das Gehäuse (12) in der Halteschelle (144) fixierbar ist.

34. Wegaufnehmervorrichtung nach Anspruch 33, **dadurch gekennzeichnet, daß** über eine oder mehrere Fixierungsschrauben zwischen dem Gehäuse (12) und der Halteschelle (144) die Wegaufnehmervorrichtung (10) an der Halteklammer (140) fixierbar ist.

35. Wegaufnehmervorrichtung nach Anspruch 34, **dadurch gekennzeichnet, daß** eine Halteklammer (146) ein erstes Halteelement (158) mit einer ersten Halteausnehmung (160) und ein zweites Halteelement (162) mit einer zweiten Halteausnehmung (164) umfaßt, wobei das Gehäuse (12) der Wegaufnehmervorrichtung zwischen den beiden Halteelementen (158, 162) in den beiden Halteausnehmungen (160, 164) gehalten ist.

36. Wegaufnehmervorrichtung nach Anspruch 35, **dadurch gekennzeichnet, daß** die beiden Halteelemente (158, 162) über eine oder mehrere Fixierungsschrauben miteinander fixierbar sind.

37. Wegaufnehmervorrichtung nach Anspruch 36, **dadurch gekennzeichnet, daß** das Gehäuse (12) der Wegaufnehmervorrichtung (10) in einer Ausnehmung (176) an einer Anwendung fixierbar ist.

38. Wegaufnehmervorrichtung nach einem der vorangehenden Ansprüche, **dadurch gekennzeichnet, daß** das Gehäuse (12) aus einem Material hoher elektrischer und/oder thermischer Leitfähigkeit hergestellt ist.

39. Wegaufnehmervorrichtung nach einem der vorangehenden Ansprüche, **dadurch gekennzeichnet, daß** das Gehäuse (12) aus Aluminium hergestellt ist.

40. Verfahren zur Herstellung einer Wegaufnehmervorrichtung gemäß einem der vorangehenden Ansprüche, bei der die Deckel-Anschlußelement-Einheit hergestellt wird, diese Einheit in das Gehäuse eingeschoben wird und die Deckel-Anschlußelement-Einheit über den Eintauchbereich mit dem Gehäuse fixiert wird.

41. Verfahren nach Anspruch 40, **dadurch gekennzeichnet, daß** vor Einschub in das Gehäuse der Meßfühler an der Deckel-Anschlußelement-Einheit fixiert wird.

42. Verfahren nach Anspruch 40 oder 41, **dadurch gekennzeichnet, daß** eine interne Schaltungsanordnung an der Deckel-Anschlußelement-Einheit angeordnet wird.

43. Verfahren nach Anspruch 41 oder 42, **dadurch gekennzeichnet, daß** die Deckel-Anschlußelement-Einheit mit dem Meßfühler vor Einschub in das Gehäuse getestet wird.

## Claims

1. Position transducer device for detecting the position of a position transmitter (30), comprising a housing (12) extending in a longitudinal direction (14), a measuring sensor (22) arranged in the housing (12) and extending parallel to the longitudinal direction (14), the position transmitter (30) being coupled to said measuring sensor without contact, and an electrical connection element (44) arranged on the housing (12),
**characterized in that** a cover (42) for closing the housing at one end (16) and the connection element (44) are connected to one another as a unit (46) and that this cover-connection element unit (46) is fixed to the housing (12) via the cover (42), that the cover (42) has a dip-in area (66), said cover dipping into an interior (20) of the housing (12) by means of said area, that the cover-connection element unit (46) is fixed to the housing (12) without screws by means of the dip-in area (66) and that one or more seals (68) are arranged between the dip-in area (66) and an inner wall of the housing.

2. Position transducer device as defined in claim 1, **characterized in that** the cover-connection element unit (46) is pushed into the housing (12) and fixed to it.

3. Position transducer device as defined in claim 1 or 2, **characterized in that** the measuring sensor (22) is held in the housing (12) by the cover-connection element unit.

4. Position transducer device as defined in any one of the preceding claims, **characterized in that** an internal circuit arrangement (102) of the position transducer device (10) is arranged on the cover-connection element unit (46).

5. Position transducer device as defined in any one of the preceding claims, **characterized in that** the cover-connection element unit (46) has a holding element (106) extending in the longitudinal direction (14), the cover-connection element unit (46) being adapted to be fixed in the housing (12) by means of said holding element.

6. Position transducer device as defined in claim 5, **characterized in that** the holding element is designed as a holding plate (106), the width of said holding plate corresponding essentially to an internal diameter of the housing (12) at a holding position of the cover-connection element unit (46).

7. Position transducer device as defined in claim 5 or 6, **characterized in that** the holding element (106) has one or more clamping elements (114), the holding element (106) being adapted to be clamped to the housing (12) by means of said clamping elements.

8. Position transducer device as defined in claim 7, **characterized in that** the holding element (106) has a bevelled, front end for facilitating its insertability into the housing (12).

9. Position transducer device as defined in any one of claims 5 to 8,
**characterized in that** an internal circuit arrangement (102) is seated on the holding element (106).

10. Position transducer device as defined in any one of the preceding claims, **characterized in that** the dip-in area (66) is at least partially of a knurled design.

11. Position transducer device as defined in any one of the preceding claims, **characterized in that** one seal is designed in the form of an O-ring (68).

12. Position transducer device as defined in any one of the preceding claims, **characterized in that** the cover (42) of the cover-connection element unit (46) has a connecting piece (52) for accommodating a plug insert (56).

13. Position transducer device as defined in claim 12, **characterized in that** the plug insert (56) is connected via a film conductor (104) to an internal circuit arrangement (102) on the cover-connection element unit (46).

14. Position transducer device as defined in claim 13, **characterized in that** the measuring sensor (22) is connected to the circuit arrangement (102) via a film conductor (108).

15. Position transducer device as defined in any one of the preceding claims, **characterized in that** the cover (42) of the cover-connection element unit (46) is produced from a metallic material.

16. Position transducer device as defined in any one of the preceding claims, **characterized in that** a plug (190) consisting of a porous material is arranged in the housing (12) at or in the vicinity of the end facing away from the cover (42) of the cover-connection element unit (46).

17. Position transducer device as defined in claim 15 or 16, **characterized in that** the cover-connection element unit (46) is designed such that a good thermal contact prevails between the cover (42) and an internal circuit arrangement (102) seated on the cover-connection element unit (46).

18. Position transducer device as defined in any one of the preceding claims, **characterized in that** for determining the distance the propagating time of mechanical waves propagating on the measuring sensor (22) is determined.

19. Position transducer device as defined in claim 18, **characterized in that** the measuring sensor (22) is a measuring sensor acting magnetostrictively, wherein the position transmitter (30) is a magnet.

20. Position transducer device as defined in the preamble to claim 1 or as defined in any one of the preceding claims, **characterized in that** the housing (12) is of a cylindrical design with at least one open end (16) for the cover-connection element unit (46).

21. Position transducer device as defined in any one of the preceding claims, **characterized in that** the other end (18) of the housing (12) facing away from the end (16) closed by the cover-connection element unit (46) is closed by a separate cover element (32).

22. Position transducer device as defined in any one of the preceding claims, **characterized in that** the housing (12) is of a tubular design.

23. Position transducer device as defined in any one of the preceding claims, **characterized in that** the housing (12) is designed to be essentially free from edges on an outer surface (24).

24. Position transducer device as defined in any one of the preceding claims, **characterized in that** the housing (12) is designed to be essentially rotationally symmetric in relation to a longitudinal axis.

25. Position transducer device as defined in any one of the preceding claims, **characterized in that** the housing (12) has a flattened area (26) on its outer surface (24), the housing (12) being adapted to be placed on a support by means of said flattened area.

26. Position transducer device as defined in any one of the preceding claims, **characterized in that** one side of the housing has a marking (28) extending in the longitudinal direction (14) and indicating a measurement side.

27. Position transducer device as defined in claim 26, **characterized in that** the measuring sensor (22) is at a minimum distance in relation to the marking (28).

28. Position transducer device as defined in claim 26 or 27, **characterized in that** the marking (28) is formed by a flattened area (26).

29. Position transducer device as defined in any one of the preceding claims, **characterized in that** the position transmitter (30) is free floating relative to the housing (12).

30. Position transducer device as defined in any one of the preceding claims, **characterized in that** for fixing to an application one or more fixing receiving means (138; 146; 160, 164; 176) are provided, said fixing receiving means enclosing the housing (12) at least partially.

31. Position transducer device as defined in claim 30, **characterized in that** one fixing receiving means is designed as a retaining clamp (128; 140; 156).

32. Position transducer device as defined in claim 31, **characterized in that** one retaining clamp (128) is of such a bracket-like design that the housing (12) is adapted to be fixed between a holding bracket (130) of the retaining clamp (128) and the application.

33. Position transducer device as defined in claim 32, **characterized in that** one retaining clamp (140) is of a clip-like design, wherein the housing (12) is adapted to be fixed in the holding clip (144).

34. Position transducer device as defined in claim 33, **characterized in that** the position transducer device (10) is adapted to be fixed on the retaining clamp (140) via one or more fixing screws between the housing (12) and the holding clip (144).

35. Position transducer device as defined in claim 34, **characterized in that** one retaining clamp (146) comprises a first holding element (158) with a first holding recess (160) and a second holding element (162) with a second holding recess (164), wherein the housing (12) of the position transducer device is held between the two holding elements (158, 162) in the two holding recesses (160, 164).

36. Position transducer device as defined in claim 35, **characterized in that** the two holding elements (158, 162) are adapted to be fixed to one another via one or more fixing screws.

37. Position transducer device as defined in claim 36, **characterized in that** the housing (12) of the position transducer device (10) is adapted to be fixed to an application in a recess (176).

38. Position transducer device as defined in any one of the preceding claims, **characterized in that** the housing (12) is produced from a material with a high electric and/or thermal conductivity.

39. Position transducer device as defined in any one of the preceding claims, **characterized in that** the housing (12) is produced from aluminium.

40. Method for the production of a position transducer device in accordance with one of the preceding claims, wherein the cover-connection element unit is produced, this unit is inserted into the housing and the cover-connection element unit is fixed to the housing via the dip-in area.

41. Method as defined in claim 40, **characterized in that** prior to insertion into the housing the measuring sensor is fixed to the cover-connection element unit.

42. Method as defined in claim 40 or 41, **characterized in that** an internal circuit arranged is arranged on the cover-connection element unit.

43. Method as defined in claim 41 or 42, **characterized in that** the cover-connection element unit with the measuring sensor is tested prior to insertion into the housing.

## Revendications

1. Capteur de déplacement pour l'enregistrement de la course d'un transmetteur de position (30), comprenant un boîtier (12) s'étendant dans une direction longitudinale (14), un capteur de mesure (22) disposé dans le boîtier (12) et s'étendant parallèlement à la direction longitudinale (14), auquel le transmetteur de position (30) est couplé sans contact, et un élément de raccordement (44) électrique disposé sur le boîtier (12),
**caractérisé en ce qu'**un couvercle (42) pour la fermeture du boîtier sur une extrémité (16) et l'élément de raccordement (44) sont reliés entre eux sous la forme d'unité (46) et **en ce que** cette unité couvercle-élément de raccordement (46) est fixée au moyen du couvercle (42) sur le boîtier (12), **en ce que** le couvercle (42) présente une zone d'immersion (66), au moyen de laquelle il plonge dans un espace intérieur (20) du boîtier (12), **en ce que** l'unité couvercle-élément de raccordement (46) est fixée sans vis sur le boîtier (12) au moyen de la zone d'immersion (66) et **en ce que** un ou plusieurs joints (68) sont disposés entre la zone d'immersion (66) et une paroi intérieure de boîtier.

2. Capteur de déplacement selon la revendication 1, **caractérisé en ce que** l'unité couvercle-élément de raccordement (46) est glissée dans le boîtier (12) et fixée sur celui-ci.

3. Capteur de déplacement selon la revendication 1 ou 2, **caractérisé en ce que** le capteur de mesure (22) est maintenu dans le boîtier (12) par l'unité couvercle-élément de raccordement.

4. Capteur de déplacement selon l'une quelconque des revendications précédentes, **caractérisé en ce qu'**un dispositif de circuit (102) interne du capteur de déplacement (10) est disposé sur l'unité couvercle-élément de raccordement (46).

5. Capteur de déplacement selon l'une quelconque des revendications précédentes, **caractérisé en ce que** l'unité couvercle-élément de raccordement (46) présente un élément de retenue (106) s'étendant dans le sens longitudinal (14), au moyen duquel l'unité couvercle-élément de raccordement (46) peut être fixée dans le boîtier (12).

6. Capteur de déplacement selon la revendication 5, **caractérisé en ce que** l'élément de retenue est conçu comme une plaque de retenue (106), dont la largeur correspond sensiblement à un diamètre intérieur du boîtier (12) sur une position de retenue de l'unité couvercle-élément de raccordement (46).

7. Capteur de déplacement selon la revendication 5 ou 6, **caractérisé en ce que** l'élément de retenue (106) présente un ou plusieurs éléments de serrage (114) au moyen desquels l'élément de retenue (106) peut être serré sur le boîtier (12).

8. Capteur de déplacement selon la revendication 7, **caractérisé en ce que** l'élément de retenue (106) présente une extrémité avant chanfreinée pour faciliter la possibilité d'introduction dans le boîtier (12).

9. Capteur de déplacement selon l'une quelconque des revendications 5 à 8, **caractérisé en ce qu'**un dispositif de circuit (102) interne repose sur l'élément de retenue (106).

10. Capteur de déplacement selon l'une quelconque des revendications précédentes, **caractérisé en ce que** la zone d'immersion est conçue au moins en partie en forme de molette.

11. Capteur de déplacement selon l'une quelconque des revendications précédentes, **caractérisé en ce qu'**un joint est réalisé sous la forme d'un joint torique (68).

12. Capteur de déplacement selon l'une quelconque des revendications précédentes., **caractérisé en ce que** le couvercle (42) de l'unité couvercle-élément de raccordement (46) présente une tubulure (52) pour le logement d'une insertion de fiche (56).

13. Capteur de déplacement selon la revendication 12, **caractérisé en ce que** l'insertion de fiche (56) est reliée au moyen d'un conducteur de film (104) à un dispositif de circuit (102) interne sur l'unité couvercle-élément de raccordement (46).

14. Capteur de déplacement selon la revendication 13, **caractérisé en ce que** le capteur de mesure (22) est relié au moyen d'un conducteur de film (108) au dispositif de circuit (102).

15. Capteur de déplacement selon l'une quelconque des revendications précédentes, **caractérisé en ce que** le couvercle (42) de l'unité couvercle-élément de raccordement (46) est fabriqué à base de matériau métallique.

16. Capteur de déplacement selon l'une quelconque des revendications précédentes, **caractérisé en ce qu'**un bouchon (190) à base d'un matériau poreux est disposé dans le boîtier (12) sur ou à proximité de l'extrémité opposée au couvercle (42) de l'unité couvercle-élément de raccordement (46).

17. Capteur de déplacement selon la revendication 15 ou 16, **caractérisé en ce que** l'unité couvercle-élément de raccordement (46) est conçue de telle sorte qu'on a un bon contact thermique entre le couvercle (42) et un dispositif de circuit (102) interne qui repose sur l'unité couvercle-élément de raccordement (46).

18. Capteur de déplacement selon l'une quelconque des revendications précédentes, **caractérisé en ce que**, pour déterminer la distance de course, on détermine le temps de propagation d'ondes mécaniques qui se propagent sur le capteur de mesure (22).

19. Capteur de déplacement selon la revendication 18, **caractérisé en ce que** le capteur de mesure (22) est un capteur de mesure à effet magnétostrictif, le transmetteur de position (30) étant un aimant.

20. Capteur de déplacement selon le préambule de la revendication 1 ou selon l'une quelconque des revendications précédentes, **caractérisé en ce que** le boîtier (12) est de conception cylindrique avec au moins une extrémité (16) ouverte pour l'unité couvercle-élément de raccordement (46).

21. Capteur de déplacement selon l'une quelconque des revendications précédentes, **caractérisé en ce que** l'autre extrémité (18) du boîtier (12), qui est opposée à l'extrémité (16), laquelle est fermée avec l'unité couvercle-élément de raccordement (46), est fermée par un élément de couvercle (32) séparé.

22. Capteur de déplacement selon l'une quelconque des revendications précédentes, **caractérisé en ce que** le boîtier (12) est conçu en forme de tube.

23. Capteur de déplacement selon l'une quelconque des revendications précédentes, **caractérisé en ce que** le boîtier (12) est conçu sur une surface (24) extérieure sensiblement sans arêtes.

24. Capteur de déplacement selon l'une quelconque des revendications précédentes, **caractérisé en ce que** le boîtier (12) est conçu sensiblement symétrique en rotation par rapport à un axe longitudinal.

25. Capteur de déplacement selon l'une quelconque des revendications précédentes, **caractérisé en ce que** le boîtier (12) présente sur sa surface (24) extérieure une partie aplatie au moyen de laquelle le boîtier (12) peut être posé sur un support.

26. Capteur de déplacement selon l'une quelconque des revendications précédentes, **caractérisé en ce qu'**un côté de boîtier présente un repère (28) s'étendant dans le sens longitudinal (14) qui indique une cote de mesure.

27. Capteur de déplacement selon la revendication 26, **caractérisé en ce que** le capteur de mesure (22) présente une distance minimale au repère (28).

28. Capteur de déplacement selon la revendication 26 ou 27, **caractérisé en ce que** le repère (28) est formé par une partie aplatie (26).

29. Capteur de déplacement selon l'une quelconque des revendications précédentes, **caractérisé en ce que** le transmetteur de position (30) est en saillie par rapport au boîtier (12).

30. Capteur de déplacement selon l'une quelconque des revendications précédentes, **caractérisé en ce que**, pour la fixation sur une application, il est prévu un
ou plusieurs logements de fixation (138 ; 146 ; 160 ; 164 ; 176) qui entourent au moins partiellement le boîtier (12).

31. Capteur de déplacement selon la revendication 30, **caractérisé en ce qu'**un logement de fixation est conçu comme bride de retenue (128 ; 140 ; 156).

32. Capteur de déplacement selon la revendication 31, **caractérisé en ce qu'**une bride de retenue (128) est conçue en forme d'étrier de telle sorte que le boîtier (12) peut être fixé entre un étrier de retenue (130) de la bride de retenue (128) et l'application.

33. Capteur de déplacement selon la revendication 32, **caractérisé en ce qu'**une bride de retenue (140) est conçue en forme de collier, le boîtier (12) pouvant être fixé dans le collier de retenue (144).

34. Capteur de déplacement selon la revendication 33, **caractérisé en ce que** le capteur de déplacement (10) peut être fixé sur la bride de retenue (140) au moyen d'une ou plusieurs vis de fixation entre le boîtier (12) et le collier de retenue (144).

35. Capteur de déplacement selon la revendication 34, **caractérisé en ce qu'**une bride de retenue (146) comprend un premier élément de retenue (158) avec un premier évidement de retenue (160) et un second élément de retenue (162) avec un second évidement de retenue (164), le boîtier (12) du capteur de déplacement étant maintenu entre les deux éléments de retenue (158, 162) dans les deux évidements de retenue (160, 164).

36. Capteur de déplacement selon la revendication 35, **caractérisé en ce que** les deux éléments de retenue (158, 162) peuvent être fixés entre eux au moyen d'une ou de plusieurs vis de fixation.

37. Capteur de déplacement selon la revendication 36, **caractérisé en ce que** le boîtier (12) du capteur de déplacement (10) peut être fixé dans un évidement (176) sur une application.

38. Capteur de déplacement selon l'une quelconque des revendications précédentes, **caractérisé en ce que** le boîtier (12) est fabriqué dans un matériau présentant une conductibilité électrique et/ou thermique élevée.

39. Capteur de déplacement selon l'une quelconque des revendications précédentes, **caractérisé en ce que** le boîtier (12) est fabriqué en aluminium.

40. Procédé pour la fabrication d'un capteur de déplacement selon l'une quelconque des revendications précédentes, dans lequel l'unité couvercle-élément de raccordement est fabriquée, cette unité est introduite dans le boîtier et l'unité couvercle-élément de raccordement est fixée au boîtier au moyen de la zone d'immersion.

41. Procédé selon la revendication 40, **caractérisé en ce que** le capteur de mesure est fixé sur l'unité couvercle-élément de raccordement avant l'introduction dans le boîtier.

42. Procédé selon la revendication 40 ou 41, **caractérisé en ce qu'**un dispositif de circuit interne est disposé sur l'unité couvercle-élément de raccordement.

43. Procédé selon la revendication 41 ou 42, **caractérisé en ce que** l'unité couvercle-élément de raccordement est testée avec le capteur de mesure avant l'introduction dans le boîtier.
